# EUROPÄISCHE PATENTSCHRIFT

(11) **EP 2 662 124 B1**
(45) Veröffentlichungstag und Bekanntmachung des Hinweises auf die Patenterteilung: **09.11.2016**
(21) Anmeldenummer: 13179568.4
(22) Anmeldetag: 20.07.2009
(51) Int. Cl.: B01D 46/40, E21B 43/08

(54) **Trennvorrichtung für rohrförmige Durchflussvorrichtungen**
Separation apparatus for tubular throughflow apparatuses
Dispositif de séparation pour dispositifs à écoulement tubulaires

(43) Veröffentlichungstag der Anmeldung: 13.11.2013
(62) Teilanmeldung aus: 09777308.9
(73) Patentinhaber: 3M Innovative Properties Company, St. Paul, MN 55133-3427 (US); Maersk Olie & Gas A/S, 1263 Copenhagen K (DK)
(72) Erfinder: MÜSSIG, Siegfried, 82343 Pöcking (DE); WAHRMANN, Klaus, 45549 Sprockhövel (DE); WILDHACK, Stefanie, 87437 Kempten (DE); HOLZMÜLLER, Bernhard, 87490 Haldenwang (DE); JOLY, Samuel, 87471 Durach (DE)
(74) Vertreter: Ter Meer Steinmeister & Partner

(56) Entgegenhaltungen:
- WO-A1-99/06669
- US-A- 1 995 850
- US-A- 2 250 871
- US-A- 2 646 126
- US-A- 2 746 552
- US-A- 5 249 626

## Beschreibung

### Gebiet der Erfindung

Die Erfindung betrifft eine neuartige Trennvorrichtung mit verbessertem Erosions- und Abrasionswiderstand, zum Einsatz für Durchflussvorrichtungen zur Förderung von Öl-, Wasser- und Gasgemischen oder deren Einzelkomponenten, mit deren Hilfe Feststoffe, wie Sand- und Gesteinspartikel von den zu fördernden Flüssigkeiten und Gasen abgetrennt werden können. Die Trennvorrichtung dient insbesondere dazu, den erosiven und abrasiven Abtrag der Förderausrüstung in Tiefbohrungen durch Sand- und Gesteinspartikel zu verhindern. Gleichzeitig ist die Trennvorrichtung korrosionsbeständig gegenüber Behandlungsflüssigkeiten.

### Hintergrund der Erfindung

Zur Förderung von Flüssigkeiten und Gasen, wie Öl-, Wasser- und Gasgemischen oder deren Einzelkomponenten aus Gesteinsreservoires werden Bohrlochausrüstungen eingesetzt, die im Wesentlichen aus einem Förderrohr bestehen, um das Fördermedium von der äußeren Förderstelle in das innere Förderrohr zu leiten. Dabei kann es sich um ein perforiertes Rohr handeln oder um ein Rohr, das mit mindestens einer Öffnung versehen ist. Diese Öffnungen sind häufig mit einer geeigneten Vorrichtung, wie Schieber oder Ventil versehen, mit deren Hilfe der Einfluss des Fördermediums gesteuert werden kann. Dieses Förderrohr (inneres Rohr) wird im weiteren auch als Durchflussvorrichtung bezeichnet, häufig werden auch die Begriffe Schiebemuffe, sliding sleeve und sliding side door verwendet.

Bei der Förderung ist es erforderlich, die Lagerstättenpartikel und gegebenenfalls künstlich eingebrachte oder durch Abrieb erzeugte Partikel vom Fördermedium zu trennen und vor dem Eintritt in das Förderrohr herauszufiltern.

### Stand der Technik

Üblicherweise werden für diese Aufgabe metallische Drahtgewebe oder metallische Drahtgitter verwendet. Eine Lösung mit Drahtgewebe ist in der US 5,624,560 beschrieben. Diese Lösungen mit Drahtgeweben oder Drahtgittern werden noch von einer metallischen Stützstruktur getragen, um mechanisch stabil zu bleiben. Ein wesentlicher Nachteil dieser Konstruktion ist ihre geringe Beständigkeit gegenüber Verschleiß. Aufgrund der abrasiven bzw. erosiven Wirkung der mit hoher Fließgeschwindigkeit einfließenden Sand- und Gesteinspartikel werden die Filter zerstört und die Förderrohre, insbesondere an den Öffnungen und Ventilen, beschädigt. Gleichzeitig nimmt die Produktivität der Förderung ab, da nunmehr der Sand nicht mehr effektiv ausgefiltert sondern mit dem Fördermedium weitertransportiert wird. Ein weiteres Problem ist der durch den Einsatz von Behandlungsflüssigkeiten auftretende korrosive Verschleiß an den Filtern und Förderrohren. Dieser korrosive Verschleiß verstärkt wiederum den abrasiven Verschleiß. Behandlungsflüssigkeiten, wie beispielsweise Säuren, Laugen, Wasser oder Heißdampf, werden zur Reinigung der Trenn- und Durchflussvorrichtung eingesetzt und zur Stimulation des Bohrlochs.

Es ist erforderlich, die Beständigkeit der Bohrlochausrüstung gegen abrasiven bzw. erosiven Verschleiß zu verbessern sowie sicherzustellen, dass sie korrosiv nicht angegriffen wird.

In der US 2004/0050217 A1 und WO 2008/080402 A1 sind Lösungen beschreiben, bei denen anstelle der metallischen Spaltsiebe Trennvorrichtungen aus porösen permeablen Werkstoffen eingesetzt werden. Die porösen Filterwerkstoffe der US 2004/0050217 A1 können metallisch, keramisch oder organisch sein, in der WO 2008/080402 A1 werden poröse keramische Werkstoffe eingesetzt.

Ein Problem der in diesen beiden Schriften beschriebenen Lösungen ist, dass Filter aus porösen Werkstoffen aufgrund ihrer schlechten mechanischen Eigenschaften zum Bruch durch Biegebelastung neigen. Die Biegebruchbelastbarkeit liegt in der Regel bei deutlich weniger als 30% derjenigen des entsprechenden dichten Werkstoffs und ist daher für die mechanischen Belastungen bei den Einsatzbedingungen in Gesteinsbohrungen nicht ausreichend.

Ein weiteres Problem ist, dass die Abrasions- und Erosionsbeständigkeit von porösen keramischen Werkstoffen deutlich geringer ist als die von dichten keramischen Werkstoffen.

Eine weitere Lösung mit einer Trennvorrichtung aus porösen Werkstoffen ist in der WO 20041099560 A1 beschrieben, die ebenfalls die oben beschriebenen Nachteile aufweist. In einer weiteren Ausführungsform (Seite 7, Zeile 24 - Seite 8, Zeile 2 und Anspruch 20) sieht die WO 20041099560 A1 vor, einen konventionellen Sandfilter außen zusätzlich durch eine Manschette aus erosionsbeständigen, dichten Ringen zu schützen, die an ihren oberen und unteren Oberflächen zusätzlich Rippen oder Grübchen haben. An den aufeinandergestapelten Ringen bildet sich ein gewundener Flüssigkeitskanal aus, an dessen Wänden sich die Energie des durchströmenden Mediums durch Aufprall verringert, so dass der Verschleiß des darunter liegenden, konventionellen Sandfilters reduziert wird. Vorzugsweise sind die Ringe aus Carbiden oder Nitriden wie Siliziumcarbid oder Wolframcarbid gebildet. Nachteilig bei dieser Lösung ist, dass der verbesserte Verschleißschutz mit einer Energiedissipation des strömenden Mediums einhergeht; die äußere Manschette wirkt nicht als Filter sondern als Strömungswiderstand, der die Förderleistung verschlechtert. Es wird nicht offenbart, wie die Manschette auf dem Förderrohr befestigt wird.

In der US 5,249,626 wird ein zylindrischer Siebfilter vorgestellt, der eine Vielzahl von gestapelten, ringförmigen Filtersegmenten beinhaltet. Der Ringstapel wird durch mehrere Gewindestäbe mit Gewindemuttern oder auch Doppelmuttern aus Edelstahl jeweils am oberen und unteren Ende zusammengehalten. Die Trennung der Partikel erfolgt am variablen Ringspalt, der zwischen gegenüberliegenden Filtersegmenten ausgebildet ist. Die Ringe sind aus Kunststoff, bevorzugt aus glasverstärktem Polypropylen (Spalte 4, Z. 50-54). Die Gewindestäbe werden durch dafür vorgesehene Öffnungen in den Ringen geführt (Spalte 4, Z. 3 1-33). Diese Lösung lässt sich aus Keramiken nicht realisieren. Die Querschnittsübergänge sind kantig; die Filtersegmente haben ein typisches Kunststoff-Design. Die Abstandshalter sind flächig ausgebildet, Biegespannungen könnten so bei keramischen Ringen nicht ausgeglichen werden. Die starre Lagerung der Stützkonstruktion würde es bei keramischen Ringen zudem nicht gestatten, Verformungen aufzunehmen; dies ist aber bei der Einbringung des Filters in die Bohrung zwingend erforderlich. Weitere Nachteile des in der US 5,249,626 beschriebenen Siebfilters aus glasverstärktem Polypropylen sind dessen unzureichende Erosions- und Abrasionsbeständigkeit sowie ungenügende Korrosionsbeständigkeit.

Die US 2,646,126 beschreibt eine Trennvorrichtung mit einer inneren rohrförmigen Durchflussvorrichtung für Gesteins- und Tiefbohrungen, die einen Stapel aus Ringen (32') aufweist, die über mehrere über den Umfang verteilte Abstandshalter (36') aufweisen, die den Trennspalt zwischen den Ringen bestimmen. Die Trennvorrichtung ist mittels Verschraubungen (42, 14) an einem zentralen Durchflussrohr befestigt, wobei die Ringe auf dem Durchflussrohr aufliegen. Die Siebelemente bzw. Ringe können aus Keramik bestehen. Zwischen der oberen Verschraubung (42) und dem Ringstapel kann ein elastisches Element (40) eingespannt werden.

### Aufgabe der Erfindung

Der Erfindung liegt die Aufgabe zugrunde, unter Überwindung der Nachteile des Standes der Technik eine Trennvorrichtung mit einer inneren rohrförmigen Durchflussvorrichtung zur Abtrennung von Sand- und Gesteinspartikeln bei der Förderung von Flüssigkeiten oder Gasen aus Tief- oder Gesteinsbohrungen zur Verfügung zu stellen, die eine bessere Verschleiß- bzw. Abrasions- und Erosionsbeständigkeit und eine geringere Bruchneigung als die im Stand der Technik bekannten Trennvorrichtungen aufweist, und die zudem korrosionsbeständig gegenüber Behandlungsflüssigkeiten ist, und bei der die Förderleistung durch den Verschleißschutz nicht nachteilig beeinflusst wird, und die den bei der Förderung und insbesondere beim Einbau auftretenden Biegebelastungen standhalten kann.

### Zusammenfassung der Erfindung

Die vorstehende Aufgabe wird erfindungsgemäß gelöst durch eine Trennvorrichtung gemäß Anspruch 1 sowie deren Verwendung gemäß Anspruch 20, Vorteilhafte und besonders zweckmäßige Ausgestaltungen des Anmeldungsgegenstandes sind in den Unteransprüchen angegeben.

Gegenstand der Erfindung ist somit eine Trennvorrichtung mit einer inneren rohrförmigen Durchflussvorrichtung zur Förderung von Flüssigkeiten oder Gasen aus Gesteins- oder Tiefbohrungen, wobei die Trennvorrichtung zur Abtrennung von Sand- und Gesteinspartikeln geeignet ist und umfasst:
- einen Ringstapel aus sprödharten ringförmigen Scheiben, wobei die Scheiben so gestapelt und verspannt sind, dass zwischen den einzelnen Scheiben jeweils ein Trennspalt zur Abtrennung von Sand- und Gesteinspartikeln vorhanden ist, wobei die ringförmigen Scheiben auf ihrer Oberseite mindestens drei über den Kreisumfang der Scheiben gleichmäßig verteilte Abstandshalter aufweisen, welche es ermöglichen, die Höhe des Trennspaltes einzustellen, der Innendurchmesser der ringförmigen Scheiben größer ist als der Durchmesser der inneren rohrförmigen Durchflussvorrichtung, sodass die ringförmigen Scheiben nicht auf der rohrförmigen Durchflussvorrichtung aufliegen, und wobei der sprödharte Werkstoff der ringförmigen Scheiben gewählt ist aus oxidischen und nicht oxidischen keramischen Werkstoffen, Mischkeramiken aus diesen Werkstoffen, keramischen Werkstoffen mit Zusatz von Sekundärphasen, und lang- und/oder kurzfaserverstärkten Keramikwerkstoffen,
- ein Ankopplungselement an einem oder beiden Enden des Ringstapels;
- Klemmvorrichtungen an beiden Enden des Ringstapels, welche es einerseits ermöglichen, die sprödharten Scheiben flexibel zu verspannen und andererseits den Ringstapel auf der rohrförmigen Durchflussvorrichtung variabel zu befestigen, wobei die Klemmvorrichtungen Klemmhülsen, Druckfedern, Druckfedersitze und Klemm-Muttern umfassen.

Gegenstand der Erfindung ist ebenso die Verwendung der erfindungsgemäßen Trennvorrichtung zur Abtrennung von Sand- und Gesteinspartikeln bei einem Verfahren zur Förderung von Flüssigkeiten oder Gasen aus Gesteins- oder Tiefbohrungen mittels rohrförmigen Durchflussvorrichtungen.

Die aus sprödharten ringförmigen Scheiben (im Folgenden auch als "Ringelemente" bezeichnet) aufgebaute Trennvorrichtung ist abrasions- bzw. erosions- und korrosionsbeständig und keramikgerecht bzw. sprödharten Werkstoffen gerecht konstruiert. Die Abtrennung der Partikel ist in direkter An- und Durchströmung gewährleistet, ohne dass die Strömung negativ durch Umlenkung oder Energiedissipation beeinflusst wird.

Die Trennvorrichtung beinhaltet neben dem Stapel aus ringförmigen Scheiben eine Klemmvorrichtung (Klemmsatz), die es einerseits ermöglicht, die sprödharten Ringelemente flexibel zu verspannen und andererseits den Ringstapel auf dem Förderrohr variabel zu befestigen.

Die Durchflussvorrichtung ist in ihrer Gesamtheit gegen Abrasion/Erosion geschützt, und zwar im Bereich des direkten Durchflusses, also dem Bereich der Öffnungen und Ventile des inneren Rohrs. Der Schutz erfolgt durch die Ringelemente. Vorzugsweise können auch die außerhalb dieses Bereiches liegenden Klemmsätze, Rohrabschnitte und Verbindungsstellen geschützt sein.

Die rohrförmigen Durchflussvorrichtungen können verschiedene Querschnittsformen aufweisen, wobei eine runde Querschnittsform bevorzugt ist. Ferner können die rohrförmigen Durchflussvorrichtungen auch über die Länge wechselnde Querschnittsflächen besitzen.

Die komplette Trennvorrichtung ist keramikgerecht bzw. sprödharten Werkstoffen gerecht montiert, Verformungen können aufgenommen werden, ohne dass die Gefahr eines Bruches der Ringelemente aus dem sprödharten Werkstoff besteht.

Die federnde Lagerung des Ringstapels ermöglicht, dass der Ringstapel Biegungen des inneren Rohrs ausgleichen kann. Biegungen von 3° und mehr auf 30 m können ohne Schwierigkeiten ausgeglichen werden. Die federnde Lagerung wird einerseits erreicht durch die Klemmsätze und Druckfedern, andererseits durch die bevorzugte konkave Ausformung des Ringbodens und die auf dem Ringboden bevorzugt angebrachten, die Abstandshalter aufnehmenden Vertiefungen, die insgesamt zu einer Beweglichkeit des Systems führen, so dass Biegungen ausgeglichen werden können.

Der Druckverlust der erfindungsgemäßen Trennvorrichtung ist vernachlässigbar gering und die erfindungsgemäße Trennvorrichtung wird laminar durchströmt (siehe Beispiel 3), so dass die Förderleistung nicht nachteilig beeinflusst wird.

Die Trennvorrichtung ist unter jeder Bohrlochablenkung einsetzbar, sowohl im horizontalen als auch im vertikalen Bohrloch und auch unter jeder anderen Bohrlochneigung, beispielsweise unter einer Bohrlohneigung von 60°. Dies ist ein Vorteil gegenüber den herkömmlich eingesetzten metallischen Drahtgittern.

Die Verbindung des Ringstapels mit der Durchflussvorrichtung, also dem inneren Förderrohr ist so konstruiert, dass die Durchflussvorrichtung in der bevorzugten Ausführungsform nicht verändert wird, d.h. es ist nicht erforderlich, das im Handel erhältliche innere Rohr zur Montage der erfindungsgemäße Trennvorrichtung zu verändern, beispielsweise mechanisch zu bearbeiten wie etwa durch Drehen, Fräsen oder Bohren oder über thermische Verfahren wie beispielsweise Schweißen oder auch durch Kleben mit der Trennvorrichtung zu verbinden.

Ein weiterer Vorteil ist, dass sich die abzutrennenden Sand- und Gesteinspartikel an den stabilen sprödharten Ringelementen als sogenannter sekundärer Filterkuchen (secondary gravel pack) aufbauen können. Die Stabilität dieses sekundären Filterkuchens wird durch die erfindungsgemäße Trennvorrichtung begünstigt, was zu einer Erhöhung der Bohrlochintegrität führt.

Ein weiterer Vorteil ist, dass die erfindungsgemäße Trennvorrichtung keine Stützkonstruktion benötigt wie die Kunststoff-Filtersegmente in der US 5,249,626 oder die metallischen Drahtgitter der US 5,624,560.

### Kurze Beschreibung der Zeichnungen

Die Erfindung wird anhand der Zeichnungen näher erläutert. Hierbei zeigen
**Figuren 1a-1f** verschiedene Ansichten einer erfindungsgemäßen ringförmigen Scheibe;
**Figuren 2a-2c** schematisch verschiedene Ansichten eines Ringstapels mit Ankopplungselementen;
**Figur 3** eine Durchflussvorrichtung mit erfindungsgemäßer Trennvorrichtung einschließlich Außenkäfig zur Abdeckung der Trennvorrichtung;
**Figur 3a** eine Querschnittsansicht A-A bezüglich Figur 3;
**Figuren 4a** und **4b** Klemmvorrichtungen zum Verspannen des Ringstapels und zur Befestigung des Ringstapels auf der rohrförmigen Durchflussvorrichtung;
**Figur 5** schematische Darstellung einer Schutzummantelung von Klemmvorrichtungen, außerhalb des verschleißbeständigen Ringstapels liegendem Abschnitt des Förderrohrs und Muffenbereich; und
**Figur 6** schematisch den Testaufbau für einen Durchfluss-Leistungstest.

### Detaillierte Beschreibung der Erfindung

Die erfindungsgemäße Trennvorrichtung umfasst sprödharte ringförmige Scheiben, die einfach und wirtschaftlich zu fertigen sind. Die Herstellung dieser ringförmigen Scheiben ist mittels pulvermetallurgischer oder keramischer Verfahren in einer automatisierten Mengenfertigung möglich. Die ringförmigen Scheiben können im so genannten Net-Shape-Prozess, bei dem die Ringscheiben aus Pulvern endkonturnah gepresst werden, hergestellt werden. Eine aufwändige mechanische Bearbeitung der Ringscheiben ist nicht erforderlich. Die bei einem Sinterprozess teilweise nicht vermeidbaren Form- und Maßabweichungen bei den einzelnen Ringscheiben sind bei einem erfindungsgemäßen Aufbau der Trennvorrichtung tolerierbar.

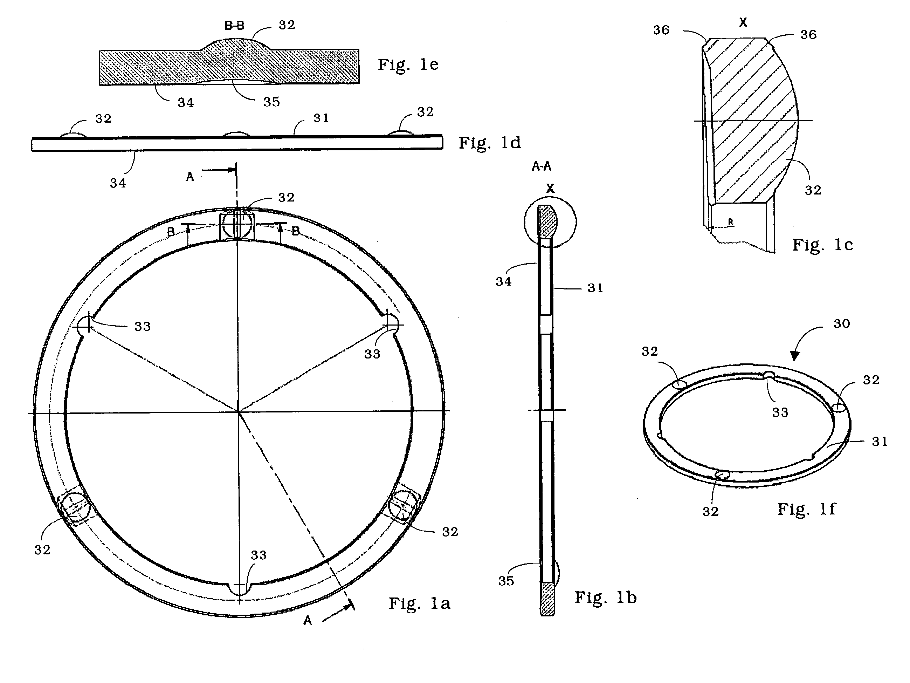

Die in der Trennvorrichtung eingesetzten ringförmigen Scheiben sind in den Figuren 1a-1f dargestellt. Sie sind aus einem sprödharten Werkstoff, nämlich einem keramischen Werkstoff gefertigt, der abrasions-/erosionsbeständig ist gegen die Sand- und Gesteinspartikel sowie korrosionsbeständig gegen die Fördermedien und die zur Reinigung verwendeten Medien wie beispielsweise Säuren.

Die Abtrennung der Sand- und Gesteinspartikel erfolgt an einem radialen, vorzugsweise sich verjüngenden Spalt, der sich zwischen zwei aufeinanderliegenden, verspannten Ringelementen bildet. Die Ringelemente sind keramikgerecht bzw. sprödharten Werkstoffen gerecht konstruiert: Querschnittsübergänge sind ohne Kerben ausgeführt, die Ausbildung von Biegespannungen wird konstruktiv vermieden oder ausgeglichen.

Der Innendurchmesser der ringförmigen Scheiben ist größer als der Durchmesser des inneren Rohres (Förderrohr) zu wählen, die ringförmigen Scheiben liegen auf dem inneren Rohr nicht auf. So wird gewährleistet, dass die beim Einbringen ins Bohrloch auftretende Durchbiegung über die Konstruktion des Ringstapels aufgenommen werden kann und ein Bruch der keramischen Elemente vermieden wird.

Die Höhe der ringförmigen Scheiben ist abhängig von der geforderten Durchflussrate.

Die Figuren 1a-1f zeigen die Grundform einer erfindungsgemäßen ringförmigen Scheibe 30, die auf ihrer Oberseite 31 mindestens drei über den Kreisumfang der Scheiben gleichmäßig verteilte Abstandshalter 32 aufweist, mit deren Hilfe die Höhe des Trennspaltes (Spaltweite) eingestellt wird. Wie aus der Seitenansicht gemäß Figur 1d und der vergrößerten Schnittansicht gemäß Figur 1e entlang der Linie B-B in Figur 1a ersichtlich, sind die Abstandshalter 32 vorzugsweise in Form von Kugelabschnitten ausgebildet, um einen Punktkontakt zwischen gegenüberliegenden ringförmigen Scheiben 30 zu erzielen und flächige Kontakte zu vermeiden.

Es ist aber auch möglich, dass es zwischen gegenüberliegenden ringförmigen Scheiben einen Linienkontakt oder auch einen Flächenkontakt gibt. Ein Linienkontakt wird beispielsweise erhalten, wenn die Oberseiten der ringförmigen Scheiben eine wellenförmige Struktur aufweisen. Ein Flächenkontakt kann beispielsweise über elliptische Plateaus erreicht werden. Es sind aber auch andere Ausformungen möglich. Beim Aufeinanderstapeln werden die einzelnen Abstandshalter im Stapel fluchtend übereinander positioniert. Die Abstandshalter sind keine separat aufgebrachten Elemente, sie werden direkt bei der Herstellung der ringförmigen Scheiben ausgebildet.

Figur 1b zeigt eine Schnittansicht entlang der Linie A-A in Figur 1a. Eine vergrößerte Darstellung des Bereichs X durch einen Abstandshalter 32 ist in Figur 1c gezeigt. Eine perspektivische Ansicht einer erfindungsgemäßen ringförmigen Scheibe ist in Figur 1f dargestellt.

Die ringförmigen Scheiben 30 haben an ihrer inneren Umfangsfläche vorzugsweise wenigstens drei Aussparungen/Nuten 33, die der Aufnahme von Führungsstäben 9 dienen. Anhand dieser Führungsstäbe 9 können die Ringe beim Einbau leichter fluchtend übereinander positioniert werden. Die Aussparungen sind vorzugsweise abgerundet ausgeformt, wie in Figuren 1a und 1f gezeigt.

Die Oberseite 31 der ringförmigen Scheiben 30 kann im rechten Winkel zur Scheibenachse oder nach innen abfallend oder nach außen abfallend mit ebener oder gekrümmter Fläche ausgeführt sein. Eine nach innen abfallende Ausführung ist vorteilhaft in Bezug auf eine verminderte Neigung zum Zusetzen der Trennvorrichtung.

Die Unterseite 34 (Ringboden) der ringförmigen Scheiben 30 ist nach außen oder nach innen abfallend, vorzugsweise nach innen abfallend, weiter vorzugsweise ist sie konkav ausgebildet, wie in Figur 1c gezeigt. Die konkave Ausformung ist auf den Ringboden als ganzes zu verstehen. Hier ist der Ringboden mit einem Radius R ausgeführt. Durch die konkave Ausformung können die einzelnen ringförmigen Scheiben einer Biegebelastung leicht ausweichen. Durch die konkave Ausformung des Ringbodens in Kombination mit der Drei-Punkt-Auflage können mögliche Form- und Maßabweichungen leicht ausgeglichen werden.

Außerdem verhindert die nach innen abfallende Form der Unterseite eine dezentrale Verschiebung der einzelnen Ringe im Stapel. Diese radiale Selbstzentrierung des Ringstapels ermöglicht die Verwendung der Trennvorrichtung ohne Stützkonstruktion, die bei metallischen Ringen oder Kunststoffringen in der Regel notwendig und üblich ist, siehe beispielsweise in der US 5,249,626 oder in der US 5,624,560.

Auf der Unterseite 34 der Ringe gibt es vorzugsweise zusätzlich mindestens drei Vertiefungen 35 , in denen die Abstandshalter 32 der gegenüberliegenden Oberseite des nächsten Ringsegmentes positioniert werden können. Die Anzahl und der Abstand der Vertiefungen 35 richten sich nach Anzahl und Abstand der Abstandshalter 32 auf der Ringoberseite 31.

Die eingebrachten Vertiefungen 35 dienen als Verdrehsicherung der Ringe und unterstützen die Selbstzentrierung der Ringe im Stapel. Bei den Vertiefungen handelt es sich vorzugsweise um parallel zum Radius R verschobene Flächen (s. Figur 1c). So wird auch hier ein Punktkontakt zu den Abstandshaltern gewährleistet und über die Drei-Punkt-Auflage werden mögliche Form- und Maßabweichungen ausgeglichen. Die Vertiefungen 35 können auch in Form von Kugel- oder Zylinderabschnitten ausgebildet sein. Auch eine abgerundete Trapezform oder eine wellenförmige Struktur ist möglich.

Die Querschnittsform der ringförmigen Scheiben ist bevorzugt nicht rechteckig und nicht trapezförmig aufgrund der vorzugsweise konkav gewölbten Flächen. Sie hat außerdem vorzugsweise keine scharfen Kanten und Querschnittsübergänge.

In einer bevorzugten Ausführungsform sind die Außenkonturen 36 der ringförmigen Scheiben 30 mit einer Fase ausgeführt, wie in Figur 1c veranschaulicht. Gemäß einer anderen bevorzugten Ausführungsform können die Kanten auch verrundet sein. Dies stellt einen noch besseren Schutz der Kanten vor der für sprödharte Werkstoffe kritischen Kantenbelastung dar.

Die Umfangsflächen (Mantelflächen) der ringförmigen Scheiben sind bevorzugt zylindrisch (eben). Es ist aber auch möglich, die Umfangsflächen nach außen beispielsweise konvex auszuformen, um eine bessere Anströmung zu erzielen.

Die radiale Wandstärke der ringförmigen Scheiben beträgt vorzugsweise mindestens 2,5 mm, weiter vorzugsweise mindestens 5 mm. Die Höhe der Scheiben beträgt vorzugsweise 1 bis 20 mm, weiter vorzugsweise 1 bis 10 mm.

Der Außendurchmesser der ringförmigen Scheiben ist kleiner als der innere Durchmesser des Bohrlochs beziehungsweise als der Innendurchmesser des Bohrlochfutterrohres. Er beträgt üblicherweise 50-200 mm.

Die Spaltweite der Trennspalte 37 wird abhängig von der zu trennenden Sandfraktion gewählt. Am Außendurchmesser ist die Spaltweite am kleinsten, um ein Zusetzen des Ringspaltes zu vermeiden. Die Spaltweite wird eingestellt über die Höhe der Abstandshalter auf der Ringoberseite, die Tiefe der Vertiefungen auf der Ringunterseite und die Form der Ringunterseite, z.B. über den Radius der bevorzugt konkav gewölbten Fläche. Die gewählte Spaltgeometrie gewährleistet, dass die Strömungsvorgänge im Spalt laminar sind, und dass der Druckverlust zwischen Außen- und Innendurchmesser gering ist.

Die Trennvorrichtung ist rückspülbar. Durch flüssige Behandlungsmedien kann der Filterkuchen gelockert und damit die Förderleistung wieder gesteigert werden.

Der sprödharte Werkstoff der ringförmigen Scheiben ist gewählt aus oxidischen und nichtoxidischen keramischen Werkstoffen, Mischkeramiken aus diesen Werkstoffen, keramischen Werkstoffen mit Zusatz von Sekundärphasen, und lang- und / oder kurzfaserverstärkten Keramikwerkstoffen.

Beispiele für oxidische keramische Werkstoffe sind A1203, Zr02, Mullit, Spinell und Mischoxide. Beispiele für nichtoxidische keramische Werkstoffe sind SiC, B4C, TiB2 und Si3N4. Keramische Hartstoffe sind beispielsweise Carbide und Boride. Ein Beispiel für faserverstärkte Keramikwerkstoffe ist CSiC.

Die oben genannten Werkstoffe zeichnen sich dadurch aus, dass sie härter sind als die typischerweise vorkommenden Gesteinspartikel, das heißt die HVoder HRC-Härtewerte dieser Werkstoffe liegen über den entsprechenden Werten des umgebenden Gesteins. Alle diese Werkstoffe zeichnen sich gleichzeitig dadurch aus, dass sie eine größere Sprödigkeit als typische ungehärtete Stahllegierungen haben. In diesem Sinne werden diese Werkstoffe hierin als "sprödhart" bezeichnet.

Vorzugsweise werden Werkstoffe mit einer Dichte von mindestens 90%, weiter vorzugsweise mindestens 95%, der theoretischen Dichte eingesetzt, um möglichst hohe Härtewerte und hohe Abrasions- und Korrosionswiderstände zu erzielen. Vorzugsweise werden als sprödharter Werkstoff gesintertes Siliciumcarbid (SSiC) oder Borcarbid eingesetzt. Diese Werkstoffe sind nicht nur abrasionsbeständig, sondern auch korrosionsbeständig gegenüber den üblicherweise für das Freispülen der Trennvorrichtung und die Stimulation des Bohrlochs verwendeten Behandlungsflüssigkeiten wie Säuren (z.B. HCl), Laugen (z.B. NaOH) oder auch Wasserdampf.

Besonders geeignet sind beispielsweise SSiC-Werkstoffe mit feinkörnigem Gefüge (mittlere Korngröße < 5 *µ*m), wie sie beispielsweise unter dem Namen EKasic^{®} F und EKasic^{®} F plus von ESK Ceramics GmbH & Co. KG vertreiben werden. Außerdem können aber auch grobkörnige SSiC-Werkstoffe eingesetzt werden, beispielsweise mit bimodalem Gefüge, wobei vorzugsweise 50 bis 90 Vol.-% der Korngrößenverteilung aus prismatischen, plättchenförmigen SiC-Kristalliten einer Länge von 100 bis 1500 *µ*m besteht und 10 bis 50 Vol.-% aus prismatischen, plättchenförmigen SiC-Kristalliten einer Länge von 5 bis weniger als 100 *µ*m (EKasic^{®} C von ESK Ceramics GmbH & Co. KG).

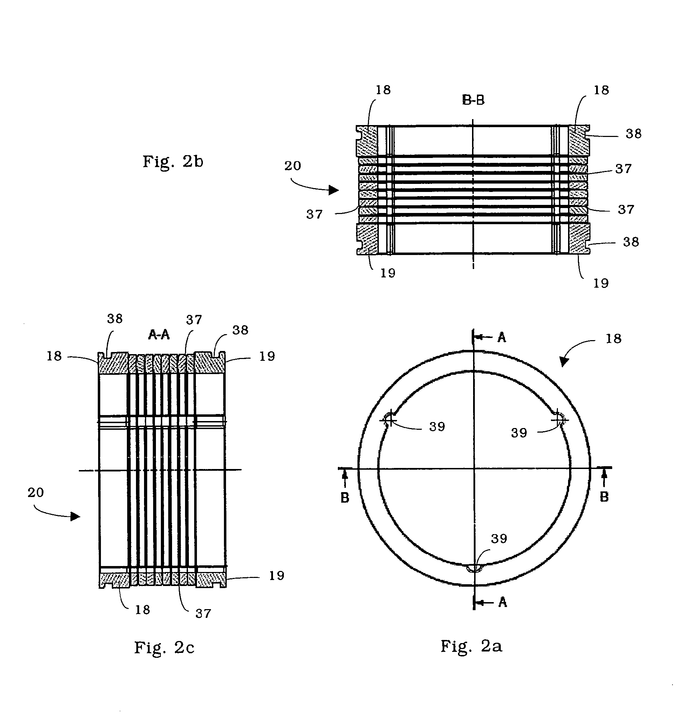

Die Ankopplungselemente 18, 19 (siehe Figuren 2a-2c, 3, 4a und 4b) bilden die stirnseitigen, seitlichen Abschlüsse des Ringstapels über die die Trennvorrichtung an der Klemmvorrichtung (den Klemmsätzen/Spannsätzen) ankoppelt. Sie sind so gestaltet, dass die Spannkräfte gleichmäßig auf den Ringstapel übertragen werden.

Die Ankopplungselemente sind vorzugsweise aus demselben Werkstoff wie die Ringe hergestellt. Alternativ können aber auch korrosionsbeständige Stähle und Kunststoffe wie beispielsweise Fluorelastomere oder PEEK (Polyetherketon) eingesetzt werden.

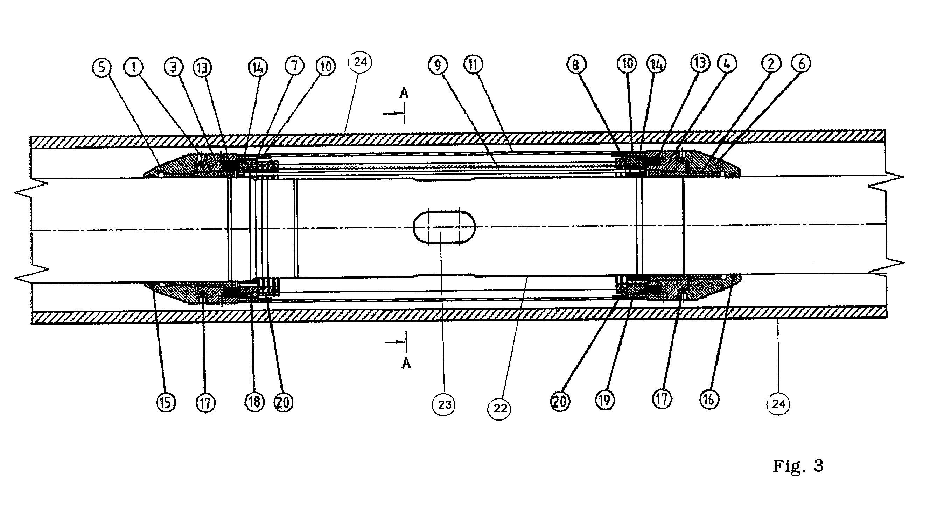

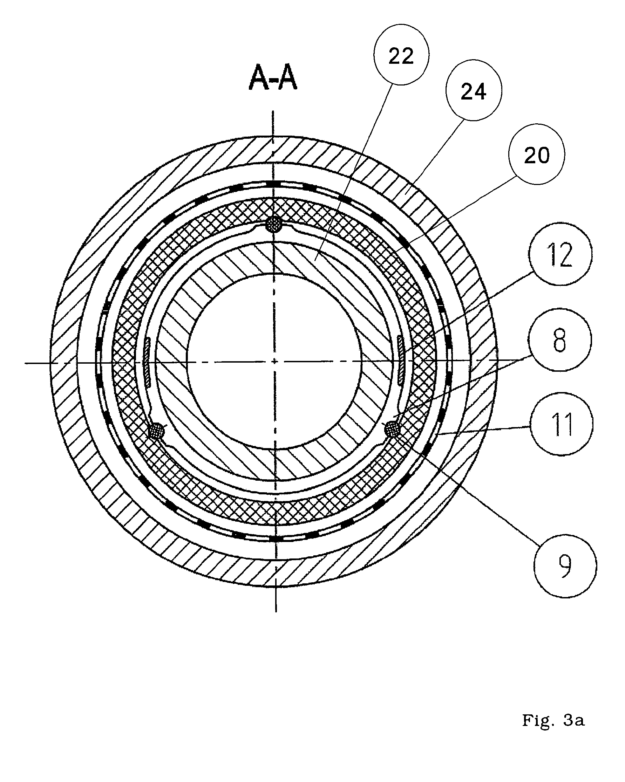

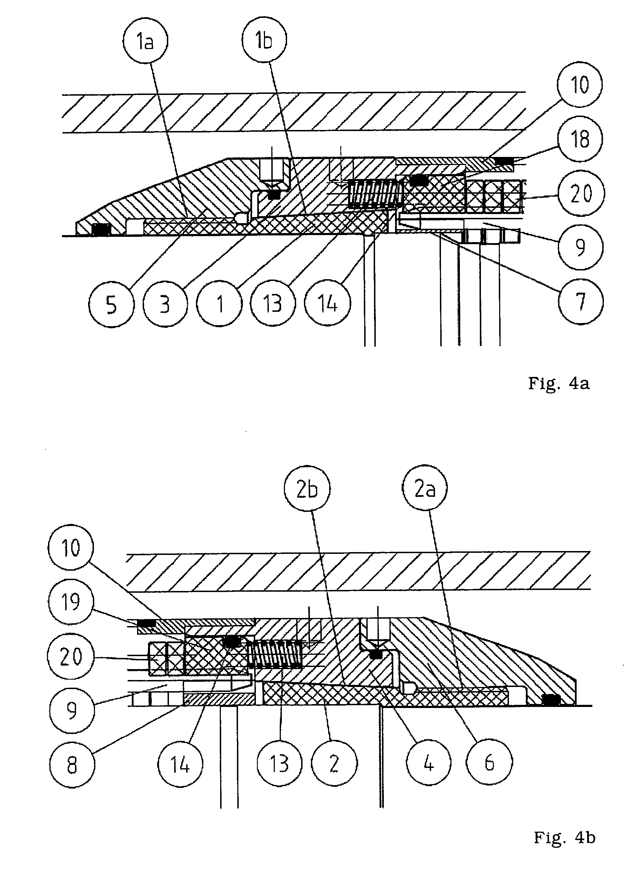

Die obere Fläche des oberen Ankopplungselementes A (18 in Figur 4a), die zur Klemmvorrichtung gerichtet ist, hat vorzugsweise eine ebene/flache Oberfläkopplungssegmentes A, ist vorzugsweise mit Radius ausgeführt, d.h. wie die Ringelemente vorzugsweise konkav. Die innere Umfangsfläche hat vorzugsweise drei oder mehr Aussparungen/Nuten (39 in Figur 2a) zur Aufnahme der Führungsstäbe 9. Die äußere Umfangsfläche hat vorzugsweise eine umlaufende Nut (38 in Figur 2b und 2c) zur Aufnahme eines Dichtrings (O-Ring) (14 in Figuren 3 und 4a).

Die untere Fläche des unteren Ankopplungselementes B (19 in Figur 4b), die zur Klemmvorrichtung gerichtet ist, hat vorzugsweise eine ebene/flache Oberfläche. Die zur Trennvorrichtung gerichtete Fläche, also die Oberseite des Ankopplungssegmentes B, hat vorzugsweise mindestens drei über den Kreisumfang der Scheiben gleichmäßig verteilte Abstandshalter. Die innere Umfangsfläche hat vorzugsweise drei oder mehr Aussparungen/Nuten (39 in Figur 2a) zur Aufnahme der Führungsstäbe 9. Die äußere Umfangsfläche hat vorzugsweise eine umlaufende Nut (38 in Figuren 2b und 2c) zur Aufnahme eines Dichtrings (O-Ring) (14 in Figuren 3 und 4b).

Die Toleranzen der beiden Ankopplungssegmente sind enger gewählt als die der Ringscheiben, um die sprödharten Komponenten optimal an die metallischen Komponenten des Klemmsatzes anzukoppeln; im Gegensatz zu den unbearbeiteten (as-sintered) Ringscheiben müssen die Ankopplungssegmente mechanisch bearbeitet werden.

Die Figuren 2a-2c zeigen einen erfindungsgemäßen Ringstapel 20 mit Ankopplungselementen 18, 19. In der Draufsicht gemäß Figur 2a sind die Aussparungen/Nuten 39 in der inneren Umfangsfläche zu erkennen, die zur Aufnahme der Führungsstäbe 9 (siehe Figuren 3, 4a und 4b) dienen.

Figur 2b zeigt eine Querschnittsansicht entlang der Linie B-B in Figur 2a, worin die umlaufenden Nuten 38, welche zur Aufnahme eines Dichtrings dienen, erkennbar sind. Ebenfalls erkennbar sind die Trennspalten 37 zwischen den einzelnen Ringscheiben. Figur 2c zeigt eine entsprechende Querschnittsansicht entlang der Linie A-A in Figur 2a.

Der Außendurchmesser der Ankopplungssegmente 18, 19 ist gleich oder größer als derjenige der Ringscheiben. Aus Handhabungsgründen ist es jedoch bevorzugt, dass der Außendurchmesser größer ist (s. Figuren 2b und 2c).

In einer alternativen Ausführungsform ist die obere Fläche des oberen Ankopplungselementes A und/oder die untere Fläche des unteren Ankopplungselementes B nicht eben/flach sondern als Federsitz ausgebildet. Auf diese Weise werden die Druckfedern direkt aufgenommen und zusätzlich gegen das Fördermedium geschützt.

Der vorzugsweise vorgesehene Distanzhalter dient vor allem als Montage- und Führungshilfe sowie als Schutz der Trennvorrichtung beim Einlassen ins Bohrloch, ist aber nicht zwingend erforderlich. Er trägt zur Funktion der Trennvorrichtung selbst nicht bei. Dies ist besonders deshalb wichtig, da die eingesetzten Materialien eine geringere Abrasions- und Korrosionsbeständigkeit aufweisen und beim Betrieb der Fördereinheit schneller verschleißen. Da der Distanzhalter jedoch keine tragende/lagernde Aufgabe besitzt und der Ringstapel erfindungsgemäß so gestaltet ist, dass er selbstzentrierend ist, bleibt die Funktion beziehungsweise die Stabilität der Trennvorrichtung durch den Verschleiß des Distanzhalters unbeeinflusst.

Der Distanzhalter besteht bevorzugt aus drei Komponenten: zwei Führungsringen (7, 8 in Figuren 3, 3a, 4a und 4b), den Abstandsleisten (12 in Figur 3a) und den Führungsstäben (9 in Figur 3, 3a, 4a und 4b).

Die beiden Führungsringe 7, 8 liegen auf dem inneren Rohr (Förderrohr 22) auf. An ihren äußeren Umfangsflächen haben sie drei oder mehr Aussparungen/Nuten eingearbeitet, die zur Aufnahme der Führungsstäbe 9 dienen. Längs zur Rohrachse des inneren Rohrs gerichtet nehmen diese Führungsstäbe 9 die Ringelemente an den inneren Aussparungen der Ringe auf. Führungsringe 7, 8 und Führungsstäbe 9 stellen zusammen den radialen Abstand zwischen den Ringelementen und dem inneren Rohr 22 dar. Die Abstandsleisten 12 sind ebenfalls an den äußeren Umfangsflächen der Führungsringe befestigt, vorzugsweise über Punktschweißen, und stellen den längsseitigen Abstand zwischen den Klemmhülsen 1, 2, das heißt die Länge des Ringstapels 20 ein.

Bei der Montage werden die ringförmigen Scheiben 30 zusammen mit den beiden Ankopplungselementen auf dem Distanzhalter aufgebaut. Mit Hilfe der biegeelastischen Führungsstäbe 9 erfolgt die Ausrichtung und Führung der Ringelemente bei der Montage. Die auf der Oberseite der Ringe angeordneten Abstandshalter 32 der ringförmigen Scheiben 30 können so beim Aufeinanderstapeln schnell und einfach jeweils übereinander ausgerichtet werden, so dass die axiale Lasteinleitung in der Achse der drei Abstandshalter 32 erfolgt. Dadurch werden die für sprödharte Werkstoffe kritischen Kantenbelastungen vermieden, und es wird auch bei Ringscheiben mit Formabweichungen eine Drei-Punkt-Auflage an den gewünschten Auflagepunkten erreicht.

Die Führungsringe 7, 8 sowie die Abstandsleisten 12 sind vorzugsweise aus Stahl, es ist aber auch möglich, Führungsringe aus Kunststoff zu verwenden. Die Führungsstäbe sind vorzugsweise nicht aus Stahl, sondern aus Kunststoff, vorzugsweise aus PEEK gefertigt, um eine elastische, gleitende Aufnahme der sprödharten Ringscheiben zu ermöglichen. Sollten die Kunststoffstäbe verschleißen, so bleibt die Trennvorrichtung aufgrund der "Selbstzentrierung" in sich stabil und die Funktion ist weiterhin gewährleistet.

Die Befestigung des Ringstapels auf dem inneren Rohr (Förderrohr) erfolgt mittels einer Klemmvorrichtung (Klemmsatz/Spannsatz).

Die Klemmvorrichtung umfasst Klemmhülsen, Druckfedern, Druckfedersitze und Klemm-Muttern.

Aufgabe des Klemmsatzes (1 bis 6 in Figur 3, 4a und 4b) ist es, die axial aufeinander gestapelten Ringelemente in sich zu verspannen, den zwischen den einzelnen Scheiben gebildeten Trennspalt mit einer Höhe vorzugsweise von 0,05-1 mm, weiter vorzugsweise 0,1-0,5 mm zu fixieren und die Trennvorrichtung auf dem inneren Rohr (Förderrohr) zu befestigen.

Mit Hilfe des Klemmsatzes und der Druckfedern 13 wird der Ringstapel flexibel verspannt, d.h. Verformungen (Biegungen) können aufgenommen werden, und variabel auf dem inneren Rohr befestigt. Es lassen sich Trennvorrichtungen beliebiger Länge zusammenstellen und die Trennvorrichtung kann auf Förderrohren unterschiedlicher Bauart montiert werden.

Die Druckfedern (13 in Figur 3, 4a und 4b) sorgen für eine elastische Kompensation und erlauben so eine Biegeverformung der Trennvorrichtung, die insbesondere beim Einbringen ins Bohrloch und gegen Bruch bei Überlast schützt.

Die Druckfedern 13 sind vorzugsweise aus korrosionsbeständigem Stahl, beschichtetem Stahl oder korrosionsbeständigem Elastomer wie beispielsweise Gummi oder Viton gewählt.

Der Klemmsatz zur Befestigung der Trennvorrichtung am inneren Rohr wird vorzugsweise als dreiteiliger kraftschlüssiger, lösbarer Pressverband ausgeführt. Er besteht aus den Komponenten Klemmhülse (1, 2 in Figuren 3, 4a und 4b), Druckfedersitz (3, 4 in Figuren 3, 4a und 4b) und Klemm-Mutter (5, 6 in Figuren 3, 4a und 4b).

Die Klemmsätze sind vorzugsweise aus Stahl, weiter vorzugsweise aus korrosionsbeständigem Stahl, gefertigt.

Die Klemmhülsen 1, 2 sind innen zylindrisch; außen lassen sich zwei Bereiche unterscheiden: ein Gewinde (1a, 2a in Figuren 4a und 4b) und eine äußere, kegelige Keilfläche (1b, 2b in Figuren 4a und 4b). Über das Gewinde greift die Klemm-Mutter an die Klemmhülse an. Die kegelige Keilfläche ist vorzugsweise in Längsrichtung geschlitzt, um größere Passungsspiele und somit relativ große Toleranzen zuzulassen. Die Klemmhülsen können vorzugsweise außen mit Kupfer beschichtet werden zum Schutz vor Kontaktkorrosion.

Die Druckfedersitze (3, 4 in Figuren 3, 4a und 4b) haben vorzugsweise eine innere konische Spannfläche, Innenführungen zur Aufnahme der Druckfedern und eine äußere Führung zur Aufnahme des Außenkäfigs (11 in Figuren 3 und 3a; 10 dient zur Aufnahme des Außenkäfigs).

Das Spannen erfolgt über die Klemm-Muttern 5, 6. Durch die axiale Spannkraft werden Klemmhülse 1, 2 und Druckfedersitz 5, 6 ineinander verschoben, wobei sie sich elastisch verformen und in den Fugen zwischen dem Spannelement und dem inneren Rohr hohe Anpresskräfte erzeugen und damit den Kraftschluss bewirken.

Die Vorrichtung wird mittels O-Ringen 15, 16 zwischen innerem Rohr und Klemm-Mutter, mittels O-Ringen 17 zwischen Klemm-Mutter und Druckfedersitz sowie mittels O-Ringen 14 zwischen Druckfedersitz und Ankopplungssegment abgedichtet.

Alternative Befestigungsarten zu Gewinde und Klemm-Mutter stellen die Kombinationen aus Nut und Sicherungsring sowie Senkbohrung und Madenschraube dar. Auch eine Befestigung mittels Schweißen ist möglich.

Außerdem ist es denkbar, alternativ zur beidseitigen biegelastischen Aufnahme eine einseitige zu wählen. Dies ist beispielsweise möglich, wenn die Verspannung gegen einen festen Anschlag auf dem Förderrohr erfolgt. Dieser Anschlag kann alternativ als ebene Fläche oder als Federsitz ausgebildet sein.

Alternativ zur Befestigung auf dem Förderrohr kann auch eine Fixierung auf den Gewindemuffen, d.h. dem Übergang zwischen verschiedenen Förderequipmenteinheiten, gewählt werden.

Die erfindungsgemäße Trennvorrichtung ist vorzugsweise gegen Beschädigungen beim Einbau sowie beim Anfahren der Förderung durch einen frei durchströmbaren Außenkäfig (11 in Figuren 3 und 3a) geschützt.

Dieser kann beispielsweise als grobmaschiges Sieb und vorzugsweise als Lochblech ausgeführt sein. Als Material wird vorzugsweise Stahl verwendet.

Alternativ ist aber auch der Einsatz eines beim Einbau schützenden, nicht durchströmbaren Polymermantels denkbar, der dann beim Anfahren der Förderung durch die Abrasion zersetzt wird und somit die Trennvorrichtung freigibt.

Die außen liegenden Flächen der Klemmsätze und die Abschnitte des Förderrohres, die nicht durch die sprödharten Ringe geschützt sind sowie die Verbindungsstellen/Muffenbereiche, an denen das Förderrohr mit anderen Komponenten zum Bohrstrang komplettiert wird, werden vorzugsweise durch eine oder mehrere Schutzummantelungen gegen Verschleiß geschützt. Grundsätzlich wird der Flüssigkeitsstrom zwar von der Förderstelle direkt durch den Ringstapel in das Förderrohr geführt, ohne Strömungsumlenkung. Es ist jedoch nicht vermeidbar, dass auch die außerhalb der Trennvorrichtung liegenden Bereiche angeströmt werden als Folge von Streuflüssen, als Folge einer ungenauen Positionierung der Trennvorrichtung zur Förderstelle oder wenn die Förderstelle weiter ausgedehnt ist als die Trennvorrichtung, so dass es zum Verschleiß der außerhalb der Trennvorrichtung liegenden Bereiche des Förderrohrs kommt. Der Verschleiß wird hervorgerufen durch Abrasion / Erosion durch Sand- und Gesteinspartikel sowie durch Korrosion. Die Korrosion tritt als Folge der verwendeten Behandlungsflüssigkeiten auf, wie beispielsweise HCl, H₂SO₄, HF und CaCl₂/CaBr₂, vor allem in Verbindung mit der auftretenden Partikelerosion, die die Ausbildung von passivierenden Oberflächenschichten verhindert.

Vorzugsweise erfolgt der Verschleißschutz der oben genannten außerhalb der Trennvorrichtung liegenden metallischen Bereiche mittels eines Kunststoffüberzuges, beispielsweise mittels eines Schrumpfschlauchs. Es ist jedoch auch möglich, den Verschleißschutz durch (Pulver-)beschichtungen oder Lackierungen zu erreichen, durch Abdeckmatten oder -folien, die beispielsweise mittels mechanischer Klemmen fixiert werden, oder auch durch Formteile. Die Formteile können beispielsweise in Form von zwei auf Maß bearbeitete Halbschalen, beispielsweise aus Polyolefin, gestaltet sein. Die Halbschalen können über Nut und Feder verbunden werden oder auch durch Verschraubung.

Um Beschädigungen der Schutzummantelung beim Einbau zu verhindern, können geeignete Abstandshalter angebracht werden, die z.B. als Gleitnoppen auf dem Lochblech realisiert werden können.

Die Materialien für den Kunststoffüberzug werden vorzugsweise aus der Stoffgruppe der Polyolefine, bevorzugt Polyethylen, Polypropylen und Poly(iso)butylan, gewählt, da diese einerseits einen ausreichenden Widerstand gegen Abrasion / Erosion und Korrosion besitzen und sich andererseits als Schrumpfschlauch applizieren lassen. Andere mögliche Materialien für die Kunststoffüberzüge oder Schrumpfschläuche sind PVDF, Viton, PVC und PTFE.

Die Verwendung eines Schrumpfschlauchs hat gegenüber anderen Lösungen folgende Vorteile:
- Es lassen sich dichte, nicht permeable Überzüge realisieren, eine Funktionstrennung durch Beschichtung mit verschiedenen Schrumpfschlauchmaterialien ist möglich. So könnte beispielsweise außen ein Material mit hohem Erosionswiderstand und innen ein Material mit hohem Korrosionswiderstand aufgebracht werden.
- Die Verbindung mit den zu schützenden Bereichen ist formschlüssig. Förder- oder Reinigungsmedien können nicht unter den Überzug "kriechen". Eine zusätzliche Abdichtung des Überzuges ist nicht erforderlich.
- Beliebige Längen können durch überlappendes Aneinanderfügen von Schlauchsegmenten geschützt werden.
- Durchmesser- und Querschnittsübergänge, wie hier an den Klemmsätzen, können überwunden werden aufgrund der Schrumpfraten bis zu 3:1 (Durchmesseränderung).
- Die Lösung ist kostengünstig, da kommerziell verfügbare Schrumpfschläuche in beliebigen Dimensionen eingesetzt und einfach appliziert werden können.

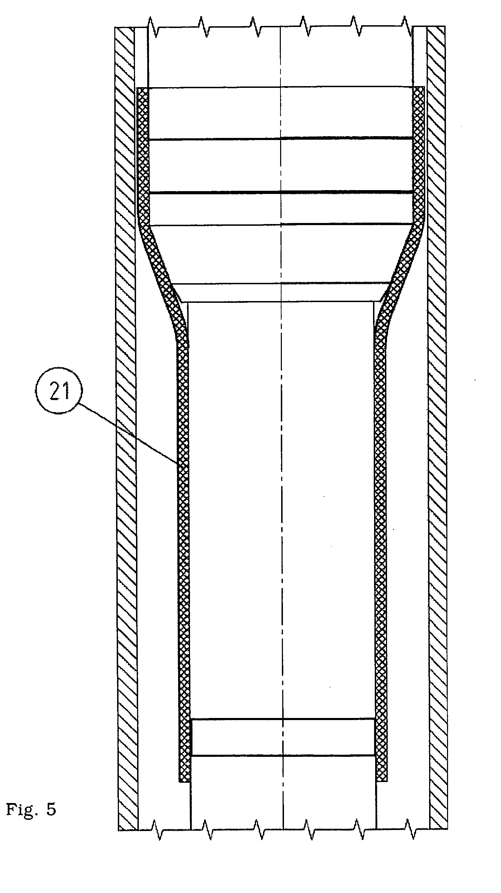

Eine Ausführung des Schrumpfschlauchs 21 ist in Figur 5 dargestellt.

### Beispiele

Die nachfolgenden Beispiele dienen zur weiteren Erläuterung der Erfindung.

### Beispiel 1: Widerstand gegen Erosion

Zur Ermittlung des erosiven Verschleißes wurden Platten (ca. 75 x 75 x 15 mm) aus grobkörniger, gesinterter Siliziumcarbid-Keramik (SSiC) vom Typ EKasic ® C (ESK Ceramics GmbH & Co. KG) und aus feinkörniger, gesinterter Siliziumcarbid-Keramik (SSiC) vom Typ EKasic ® F (ESK Ceramics GmbH & Co. KG) einem Sandstrahlversuch unterzogen. Als Referenz diente eine Stahlprobe.

Die Versuche wurden mittels einer Sandstrahlanlage durchgeführt. Als Strahlmedien dienten vier verschiedene Stützmittel, die typischerweise in Offshore-Bohrungen verwandt werden: (1) 100 Mesh Frac Sand, (2) 16/20 Mesh Frac Sand, (3) 20/40 Mesh Frac Sand, (4) 20/40 Mesh Frac Sand High Strength. Der Strahldruck betrug 2 bar und die Strahldauer 2 Stunden, wobei der Strahl quasi punktförmig in einem Winkel von 90° zur Oberfläche aufgebracht wurde. Tiefe und die Weite des Strahleindrucks charakterisieren den erosiven Verschleiß (s. Tabelle 1). Die Versuche zeigen, dass die gesinterten Siliciumcarbid-Keramiken im Vergleich zu konventionellen Stählen deutlich beständiger sind gegenüber erosivem Verschleiß. Sowohl EKasic® C als auch EKasic® F zeigen keinen messbaren oder allenfalls einen vernachlässigbaren geringen erosiven Verschleiß.

**Tabelle 1: Ergebnisse der Sandstrahlversuche**

| **Beispiel** | **Material** | **Strahlmittel** | **Tiefe [mm]** | **Weite [mm]** |
|---|---|---|---|---|
| 1.1 | EKasic® C (SSiC) | 1 | nicht messbar | 12 |
| 1.2 | EKasic® C (SSiC) | 2 | nicht messbar | 13 |
| 1.3 | EKasic® C (SSiC) | 3 | nicht messbar | 12 |
| 1.4 | EKasic® C (SSiC) | 4 | nicht messbar | 9 |
| 1.5 | EKasic® F (SSiC) | 1 | 0,1 | 14 |
| 1.6 | EKasic® F (SSiC) | 2 | nicht messbar | 12 |
| 1.7 | EKasic® F (SSiC) | 3 | nicht messbar | 12 |
| 1.8 | EKasic® F (SSiC) | 4 | 0,2 | 8 |
| 1.9 | Stahl (Referenz) | 1 | 5,3 | 17 |
| 1.10 | Stahl (Referenz) | 2 | 0,8 | 18 |
| 1.11 | Stahl (Referenz) | 3 | 5,3 | 18 |
| 1.12 | Stahl (Referenz) | 4 | 4,4 | 19 |

### Beispiel 2: Widerstand gegen Korrosion

Stäbe (ca. 3 x 4 x 25 mm) aus grobkörniger Silicumcarbid-Keramik vom Typ EKasic ® C und aus feinkörniger Siliciumcarbid-Keramik vom Typ EKasic ® F wurden einem Korrosionstest unterzogen.

Jeweils drei Stäbe wurden 14 Tage bei 80 °C in einem verschließbaren, beheizbaren Behälter in die zu untersuchende Flüssigkeit eingetaucht. Als Flüssigkeiten dienten dabei zwei verschiedene Säuremischungen, die typischerweise in Offshore- Bohrungen verwandt werden: (1) H₂SO₄, 70% und (2) HCL 12% / HF 2%. Im Anschluss an die Auslagerung wurden die Masseveränderungen zur Charakterisierung des korrosiven Verschleißes bestimmt.

Die Versuche zeigen, dass die gesinterten Siliciumcarbid-Keramiken über eine ausgezeichnete Korrosionsbeständigkeit verfügen. Sowohl EKasic® C als auch EKasic® F zeigen bei Beaufschlagung mit HCl und H₂SO₄ keinen messbaren bzw. detektierbaren Verschleiß.

**Tabelle 2: Ergebnisse der Korrosionsversuche**

| **Beispiel** | **Material** | **Korrosionsmedium** | **Massenverlust %** |
|---|---|---|---|
| 2.1 | EKasic® F/C (SSiC) | H₂SO₄, 70% | nicht messbar |
| 2.2 | EKasic® F/C (SSiC) | HCl 12% / HF 3 % | nicht messbar |

### Beispiel 3: Durchflusstest

Es wurde eine Trennvorrichtung aus einem keramischen Ringstapel hergestellt und einem Durchfluss-Leistungstest unterzogen, um den Druckverlust bei verschiedenen Durchflussraten zu ermitteln.

### Ringe

Die ringförmigen Scheiben haben einen Außendurchmesser von 130 mm und einen Innendurchmesser von 109 mm. Die Ringhöhe beträgt wahlweise 3, 5 und 8 mm. Die untere Seite ist konkav gewölbt, der Radius der Verwölbung beträgt 2000 mm. Die obere Seite ist unverwölbt eben mit drei kugelkappenförmigen Abstandshaltern mit einem Radius R = 25 mm. Die Spalthöhe am Außendurchmesser beträgt 0,25 bzw. 0,45 mm. Die ringförmigen Scheiben sind aus Siliziumcarbid gefertigt.

### Testvorrichtung

Die Testvorrichtung umfasst ein inneres Rohr, einen Stapel von ringförmigen Scheiben und eine äußere Abdeckung.

Das innere Rohr hat einen Durchmesser von 101 mm und eine Länge von 300 mm. Mittig befinden sich in der Mantelfläche vier um 90° versetzte Öffnungen (23 in Figur 3), durch die das geförderte Medium in das innere Rohr einströmen kann. Das innere Rohr entspricht damit üblicherweise eingesetzten, im Handel erhältlichen Vorrichtungen.

Die ringförmigen Scheiben sind mittels einer Stützkonstruktion, die aus drei Stäben gebildet wird, welche die ringförmigen Scheiben auf deren Innenseite führen, so um das innere Rohr gestapelt, dass die Distanzhalter übereinanderliegen und sich ein radialer Spalt ausbildet. Die Gesamtlänge der Testvorrichtung beträgt 300 mm. In Abhängigkeit von den jeweils gewählten Geometrien der Ringscheiben umfasst die Trennvorrichtung damit 38 bis 105 Scheiben. Dies entspricht einer freien Filterfläche von 5 bis 16 %.

Nach außen ist die Testvorrichtung durch ein Lochblech der Dicke 2 mm abgedeckt. Die quadratischen Löcher haben eine Länge von ca. 10 mm und sind in einem Abstand von 15 mm regelmäßig angeordnet.

### Durchflusstest

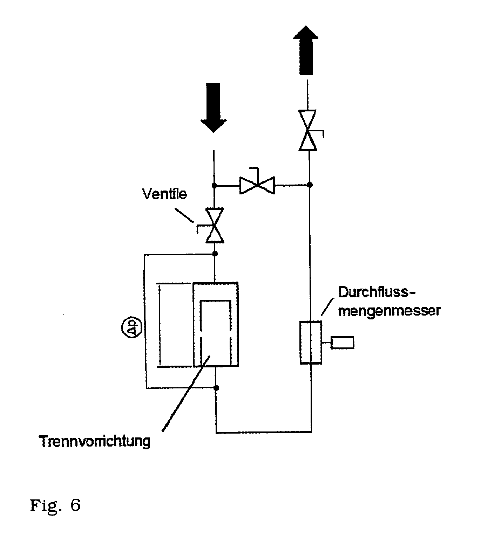

Der Test wurde mittels des in Figur 6 dargestellten Aufbaus durchgeführt. Die Testvorrichtung ist in ein zylindrisches Gehäuse eingebaut, über dessen Stirnflächen Wasser (Dichte 1,0 g/cm³, dynamische Viskosität 1 cP) bei Raumtemperatur zugeführt wird. Die Anströmung der Trennvorrichtung erfolgt über das Lochblech und die Spalte am äußeren Durchmesser der gestapelten Ringscheiben. Der Abfluss erfolgt durch das innere Rohr. Der Druckverlust zwischen Ein- und Austritt am Gehäuse wird in Abhängigkeit vom Durchfluss gemessen.

Die Testergebnisse sind in Tabelle 3 dargestellt. Der Druckverlust ist für alle Durchflüsse sehr gering, so dass die Förderleistung nicht nachteilig beeinflusst wird. Gleichzeitig ist der geringe Druckverlust ein Indikator dafür, dass die Trennvorrichtung laminar durchströmt wird.

**Tabelle 3: Ergebnisse des Durchfluss-Leistungstests**

| **Beispiel** | | | | **3.1** | **3.2** | **3.3** | **3.4** |
|---|---|---|---|---|---|---|---|
| Ringe | Aussendurchmesser | Dₐ | mm | 130 | 130 | 130 | 130 |
| | Innendurchmesser | Dᵢ | mm | 109 | 109 | 109 | 109 |
| | Mittlere Scheibenhöhe | hₘ | mm | 3 | 5 | 8 | 5 |
| | Spalthöhe am Aussendurchmesser | Sₐ | mm | 0,45 | 0,45 | 0,45 | 0,25 |
| Ringstapel | Gesamtlänge | l | mm | 300 | 300 | 300 | 300 |
| | Anzahl Ringelemente | n | - | 105 | 62 | 38 | 62 |
| | Freie Filterfläche | - | % | 15,6 | 9,2 | 5,6 | 5,1 |
| Strömung | Durchfluss Q [l/min] | | | Druckverlust Δp [Pa] | | | |
| | 22 | | | 173 | 185 | 531 | 213 |
| | 36 | | | 297 | 349 | 672 | 401 |
| | 50 | | | 452 | 567 | 916 | 641 |
| | 80 | | | 1119 | 1201 | 1788 | 1392 |
| | 110 | | | 2062 | 2201 | 2684 | 2494 |
| | 220 | | | 7834 | - | 9070 | - |

### Beispiel 4: Drucktest

Mehrere Ringstapel wurden einem Drucktest unterworfen, um den Effekt einer erhöhten Druckbeanspruchung auf die Trennvorrichtung zu simulieren. Die Ringscheiben waren gemäß Beispiel 3 ausgeführt, wobei der Stapel jeweils 10 Scheiben umfasste. Die Abstandshalter waren fluchtend übereinander angeordnet. Die Belastung erfolgte axial mittels einer hydraulischen Presse, wobei die Kraft kontinuierlich bis zum Bruch von mindestens einer der Ringscheiben aufgebracht wurde.

Die Testergebnisse sind in Tabelle 4 dargestellt.

Die Versuche zeigen, dass die Ringstapel auch bei hohen Druckbeanspruchungen ihre mechanische Integrität behalten. Damit kann die Trennvorrichtung sicher mechanisch gespannt werden. Sie ist ausreichend stabil gegen Überlast.

**Tabelle 4: Ergebnisse des Drucktests**

| **Beispiel** | | | | **4.1** | **4.2** | **4.3** | **4.4** |
|---|---|---|---|---|---|---|---|
| Ringe | Aussendurchmesser | Dₐ | mm | 130 | 130 | 130 | 130 |
| | Innendurchmesser | Dᵢ | mm | 109 | 109 | 109 | 109 |
| | Mittlere Scheibenhöhe | hₘ | mm | 3 | 5 | 8 | 5 |
| | Spalthöhe am Aussendurchmesser | Sₐ | mm | 0,45 | 0,45 | 0,45 | 0,25 |
| Ringstapel | Anzahl Ringe | n | - | 10 | 10 | 10 | 10 |
| Druckfestigkeit | Bruchlast | F_{D} | kN | 2,7 | 5,2 | > 8,0 | 6,0 |

### Beispiel 5

Das Beispiel zeigt, wie eine erfindungsgemäße Trennvorrichtung auf einem Förderrohr gemäß Abbildungen 3, 4a und 4b befestigt wird.

Das Förderrohr 22 hat eine Länge von 1200 mm und einen minimalen Durchmesser von 90 mm. Auf halber Rohrlänge befinden sich in der Mantelfläche vier um 90° versetzte Öffnungen 23, durch die das gefilterte Medium in das Innere des Rohres geleitet werden kann. An den Enden hat das Rohr jeweils einen Anschlussbereich mit einem Innen- bzw. einem Außengewinde (pup joints), mit deren Hilfe das Rohr bei der Komplettierung mit vor- und nachgeschaltetem Equipment des Bohrstranges verbunden werden kann.

Die Öffnungen 23 des Förderrohres 22 werden durch die erfindungsgemäße Trennvorrichtung geschützt. Die Trennvorrichtung umfasst den Ringspaltfilter (Ringstapel), Ankopplungselemente sowie die Klemm- bzw. Spannvorrichtung, mit deren Hilfe der Ringspaltfilter in sich mechanisch verspannt, gesichert und auf dem Rohr befestigt wird. Die Trennvorrichtung hat eine Länge von 570 mm und einen Außendurchmesser von 143 mm. Sie ist symmetrisch zur halben Rohrlänge (Öffnungsmitte, Rohrmitte) angeordnet.

Die ringförmigen Scheiben sind gemäß Abbildungen 1a-1f gefertigt. Sie haben einen Außendurchmesser von 130 mm und einen Innendurchmesser von 109 mm. Die Ringhöhe beträgt 5 mm. Die untere Seite ist konkav gewölbt. Der Radius der Verwölbung beträgt 2000 mm. An den Positionen, an denen die Distanzhalter der im Stapel benachbarten Ringscheibe aufliegen, ist jeweils eine Vertiefung ausgebildet. Die obere Seite ist unverwölbt eben, sie weist drei kugelkappenförmige Abstandshalter mit einem Radius R = 25 mm auf. Die Höhe der Kugelabschnitte ist zu 0,4 mm gewählt, so dass die Spalthöhe am Außendurchmesser 0,25 mm beträgt. Die Ringscheiben sind aus Siliziumcarbid (EKasic ® F plus) gefertigt.

Die Ringscheiben sind um das Förderrohr gestapelt und so ausgerichtet, dass sich zwischen den Scheiben jeweils ein radialer Spalt senkrecht zur Längsachse des Förderrohres ausbildet.

Der gestapelten Ringscheiben werden vom Distanzhalter geführt. Dieser umfasst drei Führungsstäbe 9 (PEEK-Stäbe mit Durchmesser 6 mm), die die Ringscheiben an den Nuten der Innenseiten führen. Die Enden eines Führungsstabes 9 liegen beidseitig auf Führungsringen 7, 8 auf. Die Führungsringe umschließen das Förderrohr 22 und sind auf diesem aufgeschoben.

Der Ringstapel (ohne Ankopplungs-Segmente) hat eine Gesamtlänge von 351 mm und umfasst 75 Scheiben. Dies entspricht einer freien Filterfläche von 5 %.

Den stirnseitigen Abschluss des Ringstapels 20 bilden zwei keramische Ankopplungs-Segmente 18, 19 aus EKasic ® F plus. Sie haben einen Außendurchmesser von 133 mm, einen Innendurchmesser von 109 mm und eine Höhe von 17 mm. Am äußeren Umfang ist eine Nut zur Aufnahme eines Dichtrings eingearbeitet (Figur 2).

In Längsrichtung ist der Ringstapel mit Hilfe von 8 Druckfedern aus Stahl verspannt, die - außen geführt - im Druckfedersitz symmetrisch angeordnet sind.

Die Befestigung auf dem Förderrohr erfolgt mit Hilfe eines Klemmsatzes gemäß den Abbildungen 3, 4a und 4b, welches aus Klemmhülse, Klemm-Mutter und Druckfedersitz gebildet wird.

Nach außen ist die Trennvorrichtung durch ein Lochblech der Dicke 2 mm abgedeckt. Die quadratischen Löcher haben eine Länge von ca. 10 mm; sie sind in einem Abstand von 5 mm regelmäßig angeordnet.

**Bezugszeichenliste**

| | | | |
|---|---|---|---|
| 1 | Klemmhülse | 30 | Ringscheibe |
| 1a | Gewinde | 31 | Oberseite Ringscheibe |
| 1b | kegelige Keilfläche | 32 | Abstandshalter |
| 2 | Klemmhülse | 33 | Aussparung |
| 2a | Gewinde | 34 | Unterseite Ringscheibe |
| 2b | kegelige Keilfläche | 35 | Aussparung |
| 3 | Druckfedersitz | 36 | Außenkanten |
| 4 | Druckfedersitz | 37 | Trennspalt |
| 5 | Klemm-Mutter | 38 | Nut |
| 6 | Klemm-Mutter | 39 | Aussparung |
| 7 | Führungsring | | |
| 8 | Führungsring | | |
| 9 | Führungsstab | | |
| 10 | Aufnahme für Außenkäfig | | |
| 11 | Außenkäfig | | |
| 12 | Abstandsleisten | | |
| 13 | Druckfeder | | |
| 14 | O-Ring | | |
| 15 | O-Ring | | |
| 16 | O-Ring | | |
| 17 | O-Ring | | |
| 18 | oberes Ankopplungselement | | |
| 19 | unteres Ankopplungselement | | |
| 20 | Ringstapel | | |
| 21 | Schutzummantelung | | |
| 22 | Förderrohr | | |
| 23 | Öffnung | | |
| 24 | Bohrlochfutterrohr | | |

## Patentansprüche

1. Trennvorrichtung mit einer inneren rohrförmigen Durchflussvorrichtung (22) zur Förderung von Flüssigkeiten oder Gasen aus Gesteins- oder Tiefbohrungen, wobei die Trennvorrichtung zur Abtrennung von Sand- und Gesteinspartikeln geeignet ist und umfasst
- einen Ringstapel (20) aus sprödharten ringförmigen Scheiben, wobei die Scheiben (30) so gestapelt und verspannt sind, dass zwischen den einzelnen Scheiben (30) jeweils ein Trennspalt (37) zur Abtrennung von Sand- und Gesteinspartikeln vorhanden ist, wobei die ringförmigen Scheiben (30) auf ihrer Oberseite (31) mindestens drei über den Kreisumfang der Scheiben gleichmäßig verteilte Abstandshalter (32) aufweisen, welche es ermöglichen, die Höhe des Trennspaltes (37) einzustellen, der Innendurchmesser der ringförmigen Scheiben (30) größer ist als der Durchmesser der inneren rohrförmigen Durchflussvorrichtung (22), sodass die ringförmigen Scheiben (30) nicht auf der rohrförmigen Durchflussvorrichtung (22) aufliegen, und wobei der sprödharte Werkstoff der ringförmigen Scheiben (30) gewählt ist aus oxidischen und nicht oxidischen keramischen Werkstoffen, Mischkeramiken aus diesen Werkstoffen, keramischen Werkstoffen mit Zusatz von Sekundärphasen, und lang- und/oder kurzfaserverstärkten Keramikwerkstoffen,
- ein Ankopplungselement (18, 19) an einem oder beiden Enden des Ringstapels (20);
- Klemmvorrichtungen an beiden Enden des Ringstapels (20), welche es einerseits ermöglichen, die sprödharten Scheiben (30) flexibel zu verspannen und andererseits den Ringstapel (20) auf der rohrförmigen Durchflussvorrichtung (22) variabel zu befestigen, wobei die Klemmvorrichtungen Klemmhülsen (1, 2), Druckfedern (13), Druckfedersitze (3, 4) und Klemm-Muttern (5, 6) umfassen.

2. Trennvorrichtung nach Anspruch 1, wobei die Abstandshalter (32) in Form von Kugelabschnitten ausgebildet sind.

3. Trennvorrichtung nach Anspruch 1 und/oder 2, wobei die ringförmigen Scheiben (30) auf ihrer Unterseite (34) mindestens drei Vertiefungen (35) aufweisen, in welchen die Abstandshalter (32) positioniert werden können.

4. Trennvorrichtung nach mindestens einem der vorangehenden Ansprüche, wobei die ringförmigen Scheiben (30) an ihrer inneren Umfangsfläche mindestens drei Aussparungen (33) aufweisen, die zur Aufnahme von Führungsstäben (9) dienen.

5. Trennvorrichtung nach mindestens einem der vorangehenden Ansprüche, wobei die Oberseite (31) der ringförmigen Scheiben (30) im rechten Winkel zur Scheibenachse ausgebildet ist.

6. Trennvorrichtung nach mindestens einem der Ansprüche 1 bis 4, wobei die Oberseite (31) der ringförmigen Scheiben (30) nach außen oder innen abfallend mit einer ebenen oder gekrümmten Fläche ausgebildet ist.

7. Trennvorrichtung nach mindestens einem der vorangehenden Ansprüche, wobei die Unterseite (34) der ringförmigen Scheiben (30) nach außen oder innen abfallend, vorzugsweise nach innen abfallend, weiter vorzugsweise konkav ausgebildet ist.

8. Trennvorrichtung nach mindestens einem der vorangehenden Ansprüche, wobei die Außenkanten (36) der ringförmigen Scheiben (30) abgefast oder verrundet sind.

9. Trennvorrichtung nach mindestens einem der vorangehenden Ansprüche, wobei die radiale Wandstärke der ringförmigen Scheiben (30) mindestens 2,5 mm, vorzugsweise mindestens 5 mm, beträgt.

10. Trennvorrichtung nach mindestens einem der vorangehenden Ansprüche, wobei die Dicke der ringförmigen Scheiben 1 bis 20 mm, vorzugsweise 1 bis 10 mm, beträgt.

11. Trennvorrichtung nach mindestens einem der vorangehenden Ansprüche, wobei der Trennspalt (37) zwischen den einzelnen Scheiben (30) eine Höhe von 0,05-1 mm, vorzugsweise 0,1-0,5 mm, aufweist.

12. Trennvorrichtung nach mindestens einem der vorangehenden Ansprüche, wobei die sprödharten Werkstoffe eine Dichte von mindestens 90%, vorzugsweise mindestens 95%, der theoretischen Dichte aufweisen.

13. Trennvorrichtung nach mindestens einem der vorangehenden Ansprüche, wobei es sich bei dem sprödharten Werkstoff um gesintertes Siliciumcarbid (SSiC) oder Borcarbid handelt.

14. Trennvorrichtung nach mindestens einem der vorangehenden Ansprüche, wobei die Ankopplungselemente (18, 19) an ihrer äußeren Umfangsfläche mindestens eine umlaufende Nut (38) zur Aufnahme eines Dichtrings (14) aufweisen.

15. Trennvorrichtung nach mindestens einem der vorangehenden Ansprüche, wobei die Ankopplungselemente (18, 19) an ihrer inneren Umfangsfläche mindestens drei Aussparungen (39) aufweisen, die zur Aufnahme von Führungsstäben (9) dienen.

16. Trennvorrichtung nach mindestens einem der vorangehenden Ansprüche, wobei der Außendurchmesser der Ankopplungselemente (18, 19) gleich oder größer ist als derjenige der ringförmigen Scheiben (30).

17. Trennvorrichtung nach mindestens einem der vorangehenden Ansprüche, wobei die Ankopplungselemente (18, 19) aus dem selben sprödharten Werkstoff wie die ringförmigen Scheiben (30) hergestellt sind.

18. Trennvorrichtung nach mindestens einem der vorangegangenen Ansprüche, wobei die Klemmvorrichtungen aus Stahl, vorzugsweise korrosionsbeständigem Stahl, gefertigt sind.

19. Trennvorrichtung nach mindestens einem der vorangehenden Ansprüche, welche weiterhin einen Distanzhalter als Montage- und Führungshilfe und/oder einen Außenkäfig (11) und/oder eine oder mehrere Schutzummantelungen (21) umfasst.

20. Verwendung einer Trennvorrichtung gemäß mindestens einem der vorangehenden Ansprüche zur Abtrennung von Sand- und Gesteinspartikeln bei einem Verfahren zur Förderung von Flüssigkeiten oder Gasen aus Gesteins- oder Tiefbohrungen mittels rohrförmigen Durchflussvorrichtungen.

## Claims

1. A separating device having an inner tubular flow-through device (22) for extracting liquids or gases from wells drilled in rock or deep wells, the separating device being suitable for the removal of sand and rock particles and comprising
- an annular stack (20) of brittle-hard annular disks, the disks (30) being stacked and braced in such a way that a separating gap (37) for the removal of sand and rock particles is present in each case between the individual disks (30), the annular disks (30) having on their upper side (31) at least three spacers (32), which are distributed uniformly over the circular circumference of the disks and make it possible to set the height of the separating gap (37), the inner diameter of the annular disks (30) being greater than the diameter of the inner tubular flow-through device (22), so that the annular disks (30) do not rest on the tubular flow-through device (22), and wherein the brittle-hard material of the annular disks (30) being chosen from oxidic and non-oxidic ceramic materials, mixed ceramics of these materials, ceramic materials with the addition of secondary phases, and long- and/or short-fiber-reinforced ceramic materials,
- a coupling-on element (18, 19) at one or both ends of the annular stack (20),
- clamping devices at both ends of the annular stack (20), making it possible on the one hand to flexibly brace the brittle-hard disks (30) and on the other hand to variably fasten the annular stack (20) on the tubular flow-through device (22), wherein the clamping devices comprising clamping sleeves (1, 2), compression springs (13), compression spring seats (3, 4) and clamping nuts (5, 6).

2. The separating device as claimed in claim 1, the spacers (32) being given the form of spherical portions.

3. The separating device as claimed in claim 1 and/or 2, the annular disks (30) having on their underside (34) at least three depressions (35), in which the spacers (32) can be positioned.

4. The separating device as claimed in at least one of the preceding claims, the annular disks (30) having on their inner circumferential surface at least three clearances (33), which serve for receiving guiding rods (9).

5. The separating device as claimed in at least one of the preceding claims, the upper side (31) of the annular disks (30) being formed at a right angle to the disk axis.

6. The separating device as claimed in at least one of claims 1 to 4, the upper side (31) of the annular disks (30) being formed sloping down outward or inward with a planar or curved surface.

7. The separating device as claimed in at least one of the preceding claims, the underside (34) of the annular disks (30) being formed sloping down outward or inward, preferably sloping down inward, more preferably formed concavely.

8. The separating device as claimed in at least one of the preceding claims, the outer edges (36) of the annular disks (30) being beveled or rounded.

9. The separating device as claimed in at least one of the preceding claims, the radial wall thickness of the annular disks (30) being at least 2.5 mm, preferably at least 5 mm.

10. The separating device as claimed in at least one of the preceding claims, the thickness of the annular disks being 1 to 20 mm, preferably 1 to 10 mm.

11. The separating device as claimed in at least one of the preceding claims, the separating gap (37) between the individual disks (30) having a height of 0.05-1 mm, preferably 0.1-0.5 mm.

12. The separating device as claimed in at least one of the preceding claims, the brittle-hard materials having a density of at least 90%, preferably at least 95%, of the theoretical density.

13. The separating device as claimed in at least one of the preceding claims, the brittle-hard material being sintered silicon carbide (SSiC) or boron carbide.

14. The separating device as claimed in at least one of the preceding claims, the coupling-on elements (18, 19) having on their outer circumferential surface at least one peripheral groove (38) for receiving a sealing ring (14).

15. The separating device as claimed in at least one of the preceding claims, the coupling-on elements (18, 19) having on their inner circumferential surface at least three clearances (39), which serve for receiving guiding rods (9).

16. The separating device as claimed in at least one of the preceding claims, the outside diameter of the coupling-on elements (18, 19) being equal to or greater than that of the annular disks (30).

17. The separating device as claimed in at least one of the preceding claims, the coupling-on elements (18, 19) being produced from the same brittle-hard material as the annular disks (30).

18. The separating device as claimed in at least one of the preceding claims, the clamping devices being produced from steel, preferably corrosion-resistant steel.

19. The separating device as claimed in at least one of the preceding claims, which also comprises a spacer as an assembling and guiding aid and/or an outer cage (11) and/or one or more protective enclosures (21).

20. The use of a separating device as claimed in at least one of the preceding claims for removing sand and rock particles in a process for extracting liquids or gases from wells drilled in rock or deep wells by means of tubular flow-through devices.

## Revendications

1. Dispositif de séparation avec un dispositif d'écoulement tubulaire intérieur (22) pour l'extraction de fluides ou de gaz de forages en roches ou profonds, dans lequel le dispositif de séparation est adapté pour la séparation de particules sableuses et rocheuses et comprend
- une pile d'anneaux (20) de disques annulaires durs et cassants, les disques (30) étant empilés et serrés de telle manière, qu'entre les disques (30) particuliers se situe respectivement une fente de séparation (37) pour la séparation de particules sableuses et rocheuses, les disques annulaires (30) ayant sur leur face supérieure (31) au moins trois écarteurs (32) équitablement répartis sur la circonférence des disques, qui permettent de régler la hauteur de la fente de séparation (37) de telle manière, que le diamètre intérieur des disques annulaires (30) est supérieur au diamètre du dispositif d'écoulement tubulaire intérieur (22), pour que les disques annulaires (30) ne reposent pas sur le dispositif tubulaire d'écoulement (22), et le matériau dur et cassant des disques annulaires (30) étant choisi parmi les matériaux céramiques oxydiques et non oxydiques, les céramiques mixtes dans ces matériaux, les matériaux céramiques contenant des phases secondaires, et les matériaux céramiques renforcés par des fibres longues et/ou courtes,
- un élément d'accouplement (18, 19) à une extrémité ou aux deux extrémités de la pile d'anneaux (20);
- des dispositifs de serrage aux deux extrémités de la pile d'anneaux (20), qui permettent d'une part de serrer les disques (30) durs et cassants de manière flexible et d'autre part d'attacher la pile d'anneaux (20) sur le dispositif d'écoulement tubulaire (22) de manière variable, les dispositifs de serrage comprenant des douilles de serrage (1, 2), des ressorts de pression (13), des sièges de ressorts de pression (3, 4) et des écrous de serrage (5, 6).

2. Dispositif de séparation selon la revendication 1, dans lequel les écarteurs (32) sont formés en forme de sections sphériques.

3. Dispositif de séparation selon la revendication 1 et/ou 2, dans lequel les disques annulaires (30) ont sur leur face inférieure (34) au moins trois cavités (35), dans lesquelles les écarteurs (32) peuvent être positionnés.

4. Dispositif de séparation selon au moins une des revendications précédentes, les disques annulaires (30) ayant à leur surface circonférentielle intérieure au moins trois encoches (33) servant à l'accueil de tiges de guidage (9).

5. Dispositif de séparation selon au moins une des revendications précédentes, la face supérieure (31) des disques annulaires (30) étant formée orthogonalement par rapport à l'axe de disque.

6. Dispositif de séparation selon au moins une des revendications 1 à 4, la face supérieure (31) des disques annulaires (30) étant formée oblique vers l'extérieur ou vers l'intérieur avec une surface plane ou courbe.

7. Dispositif de séparation selon au moins une des revendications précédentes, la face inférieure (34) des disques annulaires (30) étant formée oblique vers l'extérieur ou vers l'intérieur, préférablement oblique vers l'intérieur, plus préférablement concave.

8. Dispositif de séparation selon au moins une des revendications précédentes, dans lequel les bords extérieurs (36) des disques annulaires (30) sont chanfreinés ou arrondis.

9. Dispositif de séparation selon au moins une des revendications précédentes, l'épaisseur de paroi radiale des disques annulaires (30) étant au moins 2,5 mm, préférablement au moins 5 mm.

10. Dispositif de séparation selon au moins une des revendications précédentes, l'épaisseur des disques annulaires étant 1 à 20 mm, préférablement 1 à 10 mm.

11. Dispositif de séparation selon au moins une des revendications précédentes, la fente de séparation (37) entre les disques (30) particuliers ayant une hauteur de 0,05-1 mm, préférablement de 0,1-0,5 mm.

12. Dispositif de séparation selon au moins une des revendications précédentes, dans lequel les matériaux durs et cassants ont une densité d'au moins 90%, préférablement d'au moins 95%, de la densité théorique.

13. Dispositif de séparation selon au moins une des revendications précédentes, le matériau dur et cassant étant un carbure de silicium fritté (SSiC) ou un carbure de bore fritté.

14. Dispositif de séparation selon au moins une des revendications précédentes, les éléments d'accouplements (18, 19) ayant à leur surface circonférentielle extérieure au moins une rainure (38) pour accueillir une bague d'étanchéité (14).

15. Dispositif de séparation selon au moins une des revendications précédentes, les éléments d'accouplements (18, 19) ayant à leur surface circonférentielle intérieure au moins trois cavités (39) servant à l'accueil de tiges de guidage (9).

16. Dispositif de séparation selon au moins une des revendications précédentes, le diamètre extérieur des éléments d'accouplements (18, 19) étant égal ou supérieur par rapport à celui des disques annulaires (30).

17. Dispositif de séparation selon au moins une des revendications précédentes, les éléments d'accouplement (18, 19) étant fabriqués du même matériau dur et cassant que les disques annulaires (30).

18. Dispositif de séparation selon au moins une des revendications précédentes, les dispositifs de serrage étant fabriqués en acier, préférablement en acier résistant à la corrosion.

19. Dispositif de séparation selon au moins une des revendications précédentes, qui en plus comprend un élément d'écartement comme aide de montage ou de guidage et/ou une cage extérieure (11) et/ou une ou plusieurs gaines de protection (21).

20. Utilisation d'un dispositif de séparation selon au moins une des revendications précédentes pour la séparation de particules sableuses et rocheuses dans un procédé pour l'extraction de fluides ou de gaz de forages en roches ou profonds utilisant des dispositifs d'écoulement tubulaires.
